# EUROPÄISCHE PATENTANMELDUNG

(11) **EP 1 681 544 A1**
(43) Veröffentlichungstag der Anmeldung: **19.07.2006**
(21) Anmeldenummer: 06000411.6
(22) Anmeldetag: 10.01.2006
(51) Int. Cl.: G01L 9/00, G01L 7/08

(54) **Drucksensor mit durch Metallpulver-Spritzgussverfahren hergestelltem Verformungskörper**

(30) Priorität: 14.01.2005 DE 202005000561 U; 18.03.2005 DE 102005012686
(71) Anmelder: Trafag AG, 8708 Männedorf (CH)
(72) Erfinder: Zeisel, Dieter, 8127 Forch (CH); Gujer, Peter, 8708 Männedorf (CH); Stark, Daniel, 8646 Wagen (CH)
(74) Vertreter: Kastel, Stefan

(57) **Zusammenfassung**

Die Erfindung betrifft einen Drucksensor (2) mit einem metallenen, durch ein zu messendes Medium zur Druckmessung verformbaren Verformungskörper (4, 12; 20; 6, 22), wie insbesondere Membran (6) oder Druckmesszelle (4, 20). Um in einem besonders einfach gestalteten Verfahren gezielt nach Kundenwünschen gestalteten Drucksensor herzustellen, der unterschiedlichen Randbedingungen beim Einbau genügt, wird erfindungsgemäß vorgeschlagen, dass der Verformkörper (4, 12; 20; 6; 22) ein durch ein Spritzguss-Pulver gefertigtes Metallteil ist. Außerdem wird ein Verformkörper für einen solchen Drucksensor und ein Herstellungsverfahren hierfür beschrieben.

## Beschreibung

Die Erfindung betrifft einen Drucksensor mit einem durch ein zu messendes Medium zur Druckmessung verformbaren metallenen Verformungskörper, einen darin verwendbaren Verformungskörper sowie ein Herstellverfahren zum Herstellen des Verformungskörpers.

Drucksensoren werden im allgemeinen so aufgebaut, dass die Auslenkung einer mit dem zu messenden druckbeaufschlagten Membran festgestellt und ausgewertet wird.

Um ganz verschiedene Medien messen zu können, bestehen diese Membrane in vielen Fällen aus chemisch nicht reaktiven Materialien, insbesondere aus Edelstahl. Das Material muss dazu geeignet sein, bei Druckbeaufschlagung eine reproduzierbare Auslenkung zu liefern. Hierzu wird vielfach Federstahl verwendet.

Die Membran schließt im allgemeinen eine Seite einer Druckmesszelle ein, in der zu messendes Medium enthalten ist. Der Aufbau dieser Druckmesszelle ist je nach Anwendungs- und Einsatzzweck sehr unterschiedlich. Eine Schwierigkeit bei dem Design besteht darin, die Wandungen der Druckmesszelle einerseits dicht zu machen, andererseits mediumkompatibel zu halten, so dass auch verschiedene aggressive Medien gemessen werden können. Andererseits soll die Druckmesszelle kostengünstig herstellbar sein.

Man hat bei Drucksensoren im Stand der Technik erhebliche Anstrengungen erhoben, die Membran dichtend mit ihrem Trägermaterial zu verbinden. Hierzu wurden bereits vielfach einstückige Druckmesszellen vorgeschlagen, bei der die Membran einstückig mit der Trägerwandung ausgebildet ist. Diese Druckmesszellen sind dann beispielsweise hutförmig ausgebildet. Sie wurden bisher beispielsweise durch spanabhebende Verfahren oder Erudierverfahren aus einem massiven Stück Metall, beispielsweise einem Edelstahlblock herausgearbeitet. Diese Herstellverfahren liefern Druckmesszellen oder dergleichen Verformungskörper mit befriedigenden bis sehr guten Ergebnissen. Jedoch geben sie meist die äußere Form der Druckmesszelle vor, oder die äußere Form muss in sehr aufwändigen Verfahren an Kundenwünsche angepasst werden.

Metallische Drucksensoren werden heutzutage vorzugsweise aus 17-4 PH (1.4548 oder 1.4542), einem martensitischen Federstahl hergestellt. Es finden sich auch Legierungen wie zum Beispiel Inconel 718 oder der Stahl 1.4571. Allen bisher bekannten Drucksensoren gemeinsam ist ein komplizierter und teuerer Drehprozess, sowie eine eingeschränkte Gestaltungsmöglichkeit. Die Einschränkungen der Gestaltungsmöglichkeiten ergeben sich unter anderem dadurch, dass die typischen metallischen Druckkapseln und Drucksensoren bestimmten Randbedingungen beim Einbau genügen müssen. Es müssen die auftretenden Kräfte, wie beispielsweise Klemmkräfte und Abstützkräfte beachtet werden. Auch ist vielfach Bedingung, dass die Drucksensoren beim Schweißen auftretende Temperaturen aushalten müssen.

Aufgabe der Erfindung ist es, bei einem Drucksensor mit metallenem Verformungskörper bei einfacherer und kostengünstigerer Herstellbarkeit größere Gestaltungsmöglichten zur Verfügung zu stellen.

Diese Aufgabe wird durch einen Drucksensor nach Anspruch 1, einen Verformungskörper sowie ein Herstellverfahren nach den Nebenansprüchen gelöst.

Vorteilhafte Ausgestaltungen der Erfindung sind Gegenstand der Unteransprüche.

Erfindungsgemäß wird zur Herstellung des Verformungskörpers, also beispielsweise der Membran oder einer gesamten Druckmesszelle ein sogenanntes MIM-Verfahren vorgeschlagen. Dieses Verfahren ist auf dem Gebiet des Werkzeugbaus bereits seit längerem bekannt.

Der Begriff MIM stammt aus dem Englischen "metal injection moulding" und lässt sich etwa mit Metallpulver-Spritzguss beschreiben. Das Verfahren vereinigt die Vorteile des auf der Herstellung von Kunststoffteilen bekannten Plastikspritzgießens mit dem Sintern von Metallpulvern.

Plastikspritzgießen wird bei der Herstellung komplex geformter Kunststoffteile verwendet. In einer Spritgießmaschine wird Plastikgranulat aufgeschmolzen und dann in flüssigem Zustand unter Druck in eine Spritzform eingespritzt.

Beim Sintern von Metallpulver werden aus Metallpulvern verschiedenster Legierungen Metallteile hergestellt. Das Metallpulver wird mit großer Kraft in eine Form gepresst, wodurch ein aus Pulver aufgebautes Formteil entsteht. Diese wird der Form entnommen und einer Wärmebehandlung unterzogen, bei der die Metallpartikel durch die Fusionsprozesse zu einem Ganzen zusammenwachsen (sintern).

Bei dem Metallspritzgussverfahren wird ein meist aus Kunststoff gebildeter Binder und ein sehr feines Metallpulver zu einem spritzfähigen Ausgangsmaterial vermischt, wobei der Metallpulvergehalt den weitaus überwiegenden Gewichtsanteil ausmacht. Dieses fließfähige Material wird mit einer Spritzgießmaschine, beispielsweise einer konventionellen Plastikspritzgießmaschine wie Kunststoff zu (Vor)- Formteilen verarbeitet. Aus diesen Vor-Formteilen oder "grünen" Formteilen wird der Binderanteil, der die Formgebung erst ermöglicht hat, herausgelöst, ohne dass die Teile selbst ihre Form verlieren. In einem weiteren Schritt werden die Teile gesintert und erhalten so metallische Eigenschaften. Dabei schrumpft das Teil auf sein Endmaß mit entsprechend hoher Dichte.

Versuche haben nun ergeben, dass dieses aus anderen Gebieten bekannte MIM-Verfahren überraschenderweise auch zur Herstellung von Verformungskörpern wie Membranen oder Druckmesszellen von Drucksensoren geeignet ist. Es lassen sich hierdurch auch sehr komplexe Formen von Verformungskörpern herstellen. Die Verformungskörper können beispielsweise auch mit Hinterschneidungen, mit mehreren Membranbereichen und mit ganz komplexen äußeren Formen, die in Maschinen oder sonstige Vorrichtungen, an denen Druck zu messen ist, individuell eingepasst werden können, verarbeitet werden.

Mit diesem Verfahren lassen sich auch Metallteile herstellen, die gegenüber aggressiven Medien kompatibel sind. So lassen sich konventionelle aus rostfreiem Federstahl gebildete Membrane durch ein im MIM-Verfahren hergestelltes Formteil ersetzen. Trotz der ungewöhnlichen Herstellweise aus Metallpulver sind die mechanischen Verformungseigenschaften des so hergestellten Verformungskörpers für den Einsatz in Drucksensoren geeignet.

Hierzu lässt sich ein äußerst einfacher in einem Subkomponentenaufbau integrierter oder integrierbarer Metall-Drucksensor realisieren.

Mit dem erfindungsgemäßen Verfahren können nun die üblichen gedrehten Druckkapseln oder Druckmesszellen völlig weggelassen werden. Die Druckmesszelle kann integral in einem größeren Verformungskörper, der erfindungsgemäß hergestellt ist, einstückig damit hergestellt werden. Man lässt beim Spritzprozess einfach einen der gewünschten Druckmesskammer entsprechenden Raum.

Zur Verbesserung der Materialeigenschaften der Membran des Verformungskörpers kann der als Membran zu verwendende Bereich in dem Metallspritzgussverfahren zunächst dicker als später erwünscht hergestellt werden und dann gezielt ausgedünnt werden.

Dies erfolgt beispielsweise durch Abschleifen oder Erudieren oder sonstige bekannten Metallabtragverfahren. Hierdurch lassen sich eventuelle Oberflächendefekte entfernen oder ausheilen, so dass eine Membran mit exakt definierbarem Verformungsverhalten erhältlich ist.

In bevorzugter Ausgestaltung wird der Verformungskörper derart hergestellt, dass die Spritzdüse, mit der das Material in die Form eingespritzt wird, etwa mittig an dem späteren Membranbereich angesetzt wird. Insbesondere, wenn dieser Membranbereich rotationssymmetrisch zu der Mittelachse der Düse hergestellt wird, lässt sich so eine gute Homogenität erreichen.

Der Membranbereich ist beispielsweise durch eine dünnere Ringschicht und ein dickeres Material im Zentrum und am Rand gekennzeichnet. Spritzt man hier von der Oberseite (der dem Druckmessform abgewandten Seite) aus dem Zentrum heraus, lässt sich die Kreisringmembran sehr homogen herstellen. Die Unterseite, d. h. die Druckmess-Seite lässt sich vorzugsweise durch verschiedene Einsätze (z. B. Stempel) individuell anpassen.

Vorteile des erfindungsgemäßen Verfahrens liegen in einer überaus hohen Flexibilität und Anpassungsfähigkeit sowie in der Gestaltungsfreiheit, mit der beliebige Formen und Körper herstellbar, adaptierbar und integrierbar sind. In Bezug auf Drucksensoren ist besonders vorteilhaft, dass Schnittstellen eingespart werden können.

Man kann mit erfindungsgemäßen Verfahren die Druckmesszelle ganz ohne Fügestellen, Schweiß- oder Lötstellen oder mechanische Verbindungen mehrerer Teile herstellen.

Konkrete Ausführungsbeispiele für Verformungskörper sind zum Beispiel eine Hutmembran aus Stahl 17-4 PH (ferritisch aufgrund des Herstellungsprozesses C-frei) oder auch ein Multimembran-Element. Ein solcher Verformungskörper mit mehreren Membranbereichen kann in einem Schritt hergestellt werden. In diesem Fall ist vorteilhaft, wenn pro Membranbereich eine Spritzdüse, vorzugsweise zentrisch zu dem Membranbereich, eingesetzt wird.

Alternativ könnten Einzelteile mit je einem Membranbereich als "grüne" Formteile gespritzt werden und dann zu einem Multimembran-Element zusammengesintert werden.

Ein Vorteil des erfindungsgemäß herstellbaren Verformungskörpers liegt weiter darin, dass nicht rotationssymmetrische Befestigungselemente - anders als bei den bisher üblichen Drehprozessen - sehr einfach zu realisieren sind.

Ausführungsbeispiele der Erfindung werden nachfolgend anhand der beigefügten Zeichnung näher erläutert. Darin zeigt:
- Fig. 1: eine perspektivische Schnittansicht eines bei einer Ausführungsform eines Drucksensors verwendeten ersten Verformkörpers (z.B. Druckmesszelle) mit Anschlusseinrichtungen;
- Fig. 2: eine perspektivische Gesamtansicht des Verformkörpers (z.B. Druckmesszelle) mit Anschlusseinrichtungen von Fig. 1; und
- Fig. 3: eine perspektivische Schnittansicht eines bei einer weiteren Ausführungsform eines Drucksensors verwendbaren zweiten Verformkörpers (z. B. Druckmesszelle).

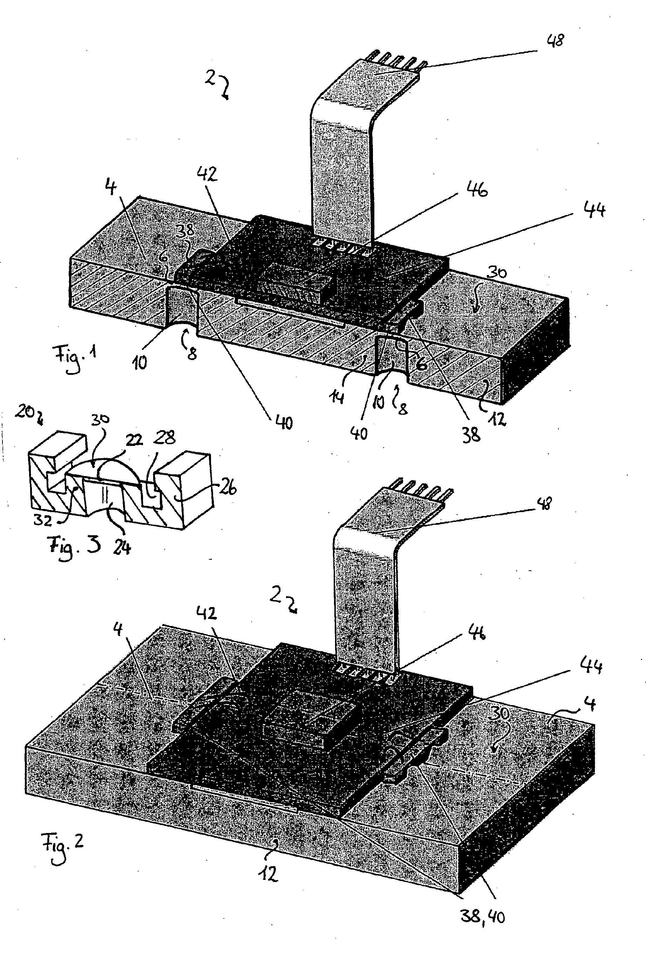

In den Fig. 1 und 2 ist eine erste Ausführungsform eines insgesamt mit 2 bezeichneten Drucksensors gemäß einer ersten Ausführungsform dargestellt. Fig. 2 zeigt dabei eine Gesamtansicht und Fig. 1 einen Längsschnitt durch den Drucksensor 2 entlang der strichpunktierten Linie von Fig. 2.

Der Drucksensor 2 hat als Verformkörper eine Drucksensorkapsel 4. Die Drucksensorkapsel 4 ist zur gleichzeitigen Messung von mehreren Drücken mit einem einstückigen Verformungskörper ausgebildet. Hierzu weist die Drucksensorkapsel 4 mehrere, nämlich hier zwei, Membrane 6 auf. Die beiden Membrane 6 sind einstückig und ohne Fugestellen mit der Drucksensorkapsel 4 ausgebildet. Dabei begrenzen die Membrane 6 an einer Seite jeweils eine als Sacköffnung 8 ausgebildete und durch einen Wandungsbereich 14 ringsum umgebene Druckmesskammer 10.

Die Drucksensorkapsel 4 ist insgesamt in Form einer Metallplatte 12, hier in diesem Beispiel mit rechteckiger Grundfläche, ausgebildet. Zur Herstellung dieser Metallplatte 12 wird ein MIM-Verfahren eingesetzt. Das MIM-Verfahren wird so durchgeführt, dass die Metallplatte 12 aus ausscheidungshärtendem, rostfreiem Stahl der Klasse 17-4 PH mit folgender nomineller Zusammensetzung (in Prozente) gebildet ist:

| | |
|---|---|
| Cr | 16.2 |
| Ni | 4.5 |
| Cu | 3.6 |
| Nb + Ta | 0.20 |
| Si | 0.5 maximal |
| Mn | 0.5 maximal |
| C | 0.03 maximal |
| Fe | Rest |

Das Material hat zum Beispiel je nach Metallnachbearbeitung (Sintern/Ausscheidungshärten) die in Tabelle 1 wiedergegebenen typischen Eigenschaften.

**Tabelle 1**

| Typische Eigenschaften | gesintert | ausscheidungsgehärtet | |
|---|---|---|---|
| | | H-900 | H-1000 |
| Dichte (g/cm³) | 7.65 | | |
| Härte, R^{c} | 25 | 38 | 33 |
| Elastizitätsmodul (10⁵ Mpa) | 1.93 | | |
| Bruchdehnung (%) | -6 | 7.5 | 8 |
| Zugfestigkeit (MPa, N/mm²) | 970 | 1170 | 1030 |
| Streckgrenze (MPa, N/mm²) | 890 | 1100 | 980 |
| Oberflächengüte, Rauheit | Rₐ 3.2 | | |

Beim MIM-Verfahren wird in der an sich bekannten Weise vorgegangen, dass aus Kunststoff und sehr feinem Metallpulvern, welches Metallpulver die obigen Eigenschaften liefert, ein spritzfähiges Ausgangsmaterial hergestellt wird. Dieses Ausgangsmaterial hat einen Metallpulvergehalt von über 90 Gewichts-Prozent. Dieses Material wird mit einer konventionellen Plastikspritzgießmaschine wie Kunststoff zu einem der späteren Form der Metallplatte 12 mit entsprechend größeren Abmaßen entsprechenden grünen Formteil verarbeitet. Danach wird der Kunststoffanteil aus dem Formteil herausgelöst, ohne dass das Formteil selbst seine Form verliert. Danach erfolgt eine Sinterung des Formteiles, wobei die metallischen Eigenschaften erhalten werden. Dabei schrumpft das Teil auf sein Endmaß mit entsprechend hoher Dichte. Eventuell erfolgt noch eine Ausscheidungshärtung.

Es gibt verschiedene Anbieter, die das Durchführen eines solches MIM-Verfahrens nach entsprechenden Vorgaben anbieten, beispielsweise die Schweizer Firma Parmaco Metal Injection Moulding AG in CH-8376 Fischingen.

Die als Drucksensorkapsel 4 wirkende fertige Metallplatte 12 sollte zur Anwendbarkeit des MIM-Verfahrens bestimmte Abmessungen bzw. ein bestimmtes Design haben. So sollte die Membran 6 jeweils nicht dünner als 0.3 mm ausgebildet sein. Die Toleranzen beim Sinterprozess sind 22 % größer als beim Spritzen und 18 % kleiner als beim Sintern. Es wird z. B. eine N6-Oberfläche vorgesehen. Die Partikelgröße des Metallpulvers beträgt z. B. ca. 15 µm. Feinere Metallpulver sind möglich, z. B. bis ca. 5 µm.

Mit diesem Verfahren können sehr leicht kundenspezifische Verformungskörper wie die als Metallplatte 12 ausgebildete Drucksensorkapsel 4 gefertigt werden.

Die Fig. 1 zeigt dabei einen Schnitt durch die Drucksensorkapsel 4 mit mehreren Membranen 6. Als weiteres Beispiel ist in Fig. 3 eine Druckkapsel 20 für ein weiteres Ausführungsbeispiel eines Drucksensors (nicht näher dargestellt) gezeigt. Der durch die Druckkapsel 20 gebildete Verformungskörper liegt in Form einer im MIM-Verfahren hergestellten Hutmembran mit einem integrierten Membran 22 und einer durch einen Wandbereich 32 zylinderförmig begrenzten Druckmesskammer 24 vor. Es ist beispielhaft dargestellt, dass die Druckkapsel 20 insgesamt nicht rotationssymmetrisch ist und komplizierte Befestigungsabschnitte 26 mit Hinterschneidungen 28 aufweist. Das Endmaterial ist Stahl 17/4 ph (ferritisch, aufgrund des Herstellungsprozesses C-frei), der von den Eigenschaften ähnlich zu 1.4548 ist. Das (grüne) Formteil wird um 23.3 % größer als die fertige Druckkapsel 20 bzw. Drucksensorkapsel 4 hergestellt.

Bei der Herstellung wird derart vorgegangen, dass die Spritzdüse von der Oberseite 30 aus zentrisch an den später die Membrane 6, 22 bildenden Membranbereichen angesetzt wird. Hierdurch ergibt sich eine gute Homogenität im Bereich der kreisringförmigen Membrane 6, 22. Die Druckmesskammern 10, 24 werden durch auswechselbare Einsätze in der jeweiligen Form gebildet. Hierzu können für verschiedene Druckbereich verschiedene Einsätze eingesetzt werden. Ausgestoßen wird dann von der konkaven Seite aus.

Die Membrane 6, 22 werden zunächst dicker hergestellt und anschließend durch Nachbearbeitung abgetragen. Beispielsweise werden die Membrane 6, 22 um einige Hundertstel Millimeter abgeschliffen. Dadurch kann man sich Kontrollen ersparen.

Einfache Hutmembrane kann man mit einer einzigen Form und einem einzelnen Formteil herstellen. Werden die Verformungskörper komplizierter, kann man mehrere grüne Formteile herstellen und anschließend zusammensintern.

Bei der in den Fig. 1 und 2 gezeigten Ausführungsformen mit den mehreren Membranen 6 wir pro Membran wenigstens eine Einspritzdüse verwendet, die zentrisch zu der jeweiligen Membran angesetzt wird. Ergibt sich beim Herstellen der Metallplatte 12 eine geringer Verzug kann dieser durch absolut plane Unterlage, auf welcher die Drucksensorkapsel 4 befestigt wird, eliminiert werden. Alternativ kann jeder Membranbereich, der später eine Membran 6 bildet, einzeln gespritzt werden und dann auf einem Blech bei 1.200°C aufgesintert werden.

Wie Fig. 3 zeigt, können nicht rotationssymmetrische Befestigungselemente, hier die Befestigungsabschnitte 26, am Membranrand mit dem hier dargestellten Verfahren sehr einfach realisiert werden.

In den Fig. 1 und 2 ist an der Drucksensorkapsel noch an jeder Membran 6 ein Kraftaufnehmer 38, z. B. in Form eines Biegebalkens 40 aufgebracht. Alternativ könnten an den Stellen maximaler Dehnung und Stauchung geeignete Dehnmessstreifen (DMS) (nicht dargestellt) formschlüssig aufgebracht werden. Bezugszeichen 42 bezeichnet die Bond-Verdrahtung. Weiter ist auf einer Leiterplatte 44 ein ASIC-Chip 46 aufgebracht, der zur elektronischen Verstärkung, Kalbration und Kompensation dient. Damit können präzise Druck- oder Spannungsmessungen erhalten werden. Ein elektrischer Ausgang 48 auf der Leiterplatte 44 ermöglicht den Signalabgriff von außen.

Damit ist insgesamt der Drucksensor 2 in einfacher Weise ganz nach Kundenwünschen herstellbar.

Entsprechende Bauteile (DMS, 38, 40, 42, 44, 46 und/oder 48) können selbstverständlich auch an der Druckkapsel 20 gemäß Fig. 3 zum Komplettieren eines entsprechenden Drucksensors vorhanden sein.

### BEZUGSZEICHENLISTE

- 2: Drucksensor
- 4: Drucksensorkapsel (Druckmesszelle)
- 6: Membran
- 8: Sacköffnung
- 10: Druckmesskammer
- 12: Metallplatte
- 14: Wandungsbereich
- 20: Druckkapsel (Druckmesszelle)
- 22: Membran
- 24: Druckmesskammer
- 26: Befestigungsabschnitt
- 28: Hinterschneidung
- 30: Oberseite
- 32: Wandungsbereich
- 38: Kraftaufnehmer
- 40: Biegebatken
- 42: Bond-Verdrahtung
- 44: Leiterplatte
- 46: ASIC-Chip
- 48: elektrischer Ausgang

## Patentansprüche

1. Drucksensor (2) mit einem metallenen, durch ein zu messendes Medium zur Druckmessung verformbaren Verformungskörper (4, 12; 20; 6, 22), wie insbesondere Membran (6) oder Druckmesszelle (4, 20),
**dadurch gekennzeichnet,**
**dass** der Verformkörper (4, 12; 20; 6; 22) ein durch ein Spritzguss-Pulver gefertigtes Metallteil ist.

2. Drucksensor (2) nach Anspruch 1,
**dadurch gekennzeichnet,**
**dass** der Verformkörper eine Metallplatte (12) mit einer durch gezielte Ausdünnung gebildeten Membran (6) ist.

3. Drucksensor (2) nach einem der voranstehenden Ansprüche,
**dadurch gekennzeichnet,**
**dass** der Verformkörper (12) mehrere durch gezielte Ausdünnung integrierte Membrane (6) aufweist.

4. Drucksensor (2) nach einem der voranstehenden Ansprüche,
**dadurch gekennzeichnet,**
**dass** an Stellen maximaler Dehnung oder Stauchung, insbesondere an einem oder mehreren Membranbereichen (6; 22), des Verformungskörpers (12, 4; 20) Kraftaufnehmer (38), insbesondere in Form von Dehnmesstreifen und/oder Biegebalken (40) aufgebracht sind.

5. Verformkörper (4, 12; 20) für einen Drucksensor (2) nach einem der voranstehenden Ansprüche,
**dadurch gekennzeichnet,**
**dass** er ein in MIM-Technik gefertigtes Metallteil (12; 20) ist.

6. Verformkörper nach Anspruch 5,
**dadurch gekennzeichnet,**
**dass** der Verformkörper (12; 20) aus rostfreien Federstahl der Klasse 17-4 PH gebildet ist.

7. Verformkörper nach einem der voranstehenden Ansprüche,
**dadurch gekennzeichnet,**
**dass** an dem Verformkörper sowohl wenigstens ein eine Membran (6, 22) bildender Membranbereich als auch ein die Membran (6, 22) stützender umlaufender Wandungsbereich (14, 32) einer Druckmesszelle (4, 20) einstückig und somit ohne Fügestellen, Nahtbereichen. Schweiß- oder Lötstellen ausgebildet sind.

8. Herstellverfahren zum Herstellen eines Verformungskörper (4, 12; 20; 6, 22) eines Drucksensors (2), **dadurch gekennzeichnet,**
**dass** der Verformungskörper (4, 12; 20; 6, 22) in einem MIM-Verfahren hergestellt wird.

9. Verfahren nach Anspruch 8 zum Herstellen eines Verformungskörpers (4, 12; 20; 6, 22) eines Drucksensors (2) mit der folgenden Reihenfolge von Schritten:
a) Mischen eines spritzfähigen Ausgangsmaterials aus Metallpulver und Binder;
b) Spritzgießen des Ausgangsmaterials zu einem die Form des Verformungskörpers (4, 12; 20) einschließlich eines Membranbereiches (6, 22) vorgebenden grünen Formteiles,
c) Herauslösen des Binderanteiles aus dem grünen Formteil
d) Sintern des Formteils.

10. Verfahren nach Anspruch 9,
**gekennzeichnet durch** den nach dem Schritt d) erfolgenden Schritt:
e) Nachbearbeiten wenigstens einer Oberfläche des Membranbereiches (6, 22) **durch** Materialabtrag.

11. Verfahren nach Anspruch 10,
**dadurch gekennzeichnet,**
**dass** in Schritt e) der Materialabtrag durch Abschleifen, insbesondere um einige hunderstel Millimeter, erfolgt.

12. Verfahren nach einem der voranstehenden Ansprüche,
**dadurch gekennzeichnet,**
**dass** als Metallpulver ein Stahlpulver zum Herstellen eines ferritischen, rostfreien Stahles verwendet wird.

13. Verfahren nach einem der voranstehenden Ansprüche,
**dadurch gekennzeichnet,**
**dass** ein Metallpulver mit einer Partikelgröße von weniger als ca. 20µm, insbesondere von ca. 5µm bis ca.15µm, verwendet wird.

14. Verfahren nach einem der voranstehenden Ansprüche,
**dadurch gekennzeichnet,**
**dass** zum Herstellen eines Formteiles mit einem in Draufsicht etwa kreisförmig berandeten Membranbereich eine Spritzgussdüse etwa zentral am herzustellenden Membranbereich (6, 22) angesetzt wird.

15. Verfahren nach einem der voranstehenden Ansprüche,
**dadurch gekennzeichnet,**
**dass** zum Herstellen eines Formteiles mit mehreren Membranbereichen pro Membranbereich eine Spritzgussdüse verwendet wird.

16. Verfahren nach einem der voranstehenden Ansprüche,
**dadurch gekennzeichnet,**
**dass** zum Herstellen eines Verformungskörpers (4, 12) mit mehreren Membranbereichen (6) zunächst mehrere Formteile im Metall-Spritzgussverfahren hergestellt werden und dann zu dem einzelnen Verformungskörper zusammengesintert werden.
